# EUROPEAN PATENT APPLICATION

(11) **EP 4 806 266 A1**
(43) Date of publication of application: **16.09.2026**
(21) Application number: 25382215.9
(22) Date of filing: 09.03.2025
(51) Int. Cl.: A01N 37/02, A01P 3/00, A01P 1/00

(54) **1-MONOGLYCERIDE OF C12 FATTY ACID FOR THE TREATMENT OR PREVENTION OF SOILBORNE INFECTIOUS PLANT DISEASES**

(71) Applicant: MBP 4 LIFE S.L., 50004 Zaragoza (ES)
(72) Inventor: DE LOS SANTOS APARICIO, MARIO, 50004 ZARAGOZA (ES); LORENA DAVILA MORA, LIZETH, FUNZA (CO); ALIRIO RODROGUEZ VELASQUEZ, EDWIN, FUNZA (CO); GASCON SANGUESA, BEATRIZ, GIRONA (ES); ZULUAGA CRUZ, ANDREA PAOLA, BOGOTÁ (CO); MONTESINOS SEGUI, EMILIO, 17820 BANYOLES (ES); MONTESINOS BARREDA, LAURA, CAMP D´OR (ES)
(74) Representative: Aguilar Catalán, Blanca

(57) **Abstract**

The invention refers to the use of 2,3-dihydroxypropyl dodecanoate for the treatment and/or prevention of a plant infectious disease or condition caused by soilborne pathogen microorganisms, specifically those selected from the group consisting of *Ralstonia solanacearum, Pectobacterium carotovorum, Agrobacterium tumefaciens, Clavibacter spp, Fusarium oxysporum* f.sp. *Cubense, Sclerotinia sclerotiorum, Phytophthora* spp and *Verticillium spp.*

## Description

### Technical Field

The invention relates to the field of phytosanitary diseases. Particularly, it relates to the use of 1-monoglyceride of C₁₂ fatty acid, or a composition containing it, for the treatment and/or prevention of diseases or conditions caused by soilborne pathogen microorganisms in plants and crops.

### Background Art

Plants are subjects to attack by soil pathogens. The use of soil biocides for protecting plants and plant production, from pathogen bacterial and/or fungal infections has been widely used. Traditionally, soil fungicidal and bactericidal compounds have been used for long to increase yields and extend agricultural production capabilities into new areas. They have also been extremely important tools for ameliorating season-to-season differences in yield and quality caused by weather-driven variations in disease pressure.

However, the extensive use of soil fungicides and bactericides in agriculture is causing increasing concern due to several undesirable factors, such as the development of resistance, the growing food safety concerns, and the accumulation of toxic compounds in the environment. As a result, more stringent regulatory restrictions have been implemented on the use of agrochemicals, and the elimination of their residues has caused the disuse and/or the banner of some biocide in agriculture. Therefore, new more effective and safety soil fungicides and bactericides against plant infections complying with the regulatory affairs rules have been investigate.

Even though the development of these new generation of biocides, there is still some soil bacterial diseases without effective treatment that cause a huge economic impact for agriculture worldwide. In particular, *Ralstonia solanacearum, Clavibacter spp, Pectobacterium carotovorum* and *Agrobacterium tumefaciens* are the causes of some of the most destructive diseases in plants. Furthermore, soilborne pathogens include many fungi, some of them also without effective biological treatment, like *Fusarium oxysporum* f.sp. *cubense* (Foc), *Phytophora spp* and *Verticillium spp.*

*Ralstonia solanacearum,* a Gram-negative bacterium, is one of the world's most important soil phytopathogenic bacteria, and it causes lethal wilting diseases of more than 200 plant species. Agronomically important hosts include peanut, potato, tomato, tobacco and banana. Although most troublesome in the tropics and subtropics, *R. solanacearum* continues to be a threat in cooler climates, especially on potato. Beyond the direct agricultural losses in major agronomic species or locally important species (banana, ginger, peanut, eucalyptus, etc.), the bacterium is also responsible for significant indirect costs as fallow contaminated plots, restriction of trade in potentially infected plants or tubers, prohibition of watering from contaminated waterways and infections in nurseries of ornamental plant species (geranium or rose). A part-time soil inhabitant, the bacterium can remain viable for years in water or soil. *R. solanacearum* enters plant roots via wounds or where secondary roots emerge, colonizes the root cortex, invades xylem vessels and rapidly spreads throughout the vascular system. *R. solanacearum* is reported to affect potatoes in 1.6 MH fields in 78 countries, causing an annual loss of $848 million.

On the other hand, *Clavibacter spp,* Gram-positive bacteria, is responsible for bacterial crancker in tomato and ring rot in potato, amongst many other plants like pepper or aubergine. The bacteria is located worldwide with high presence in Asia (China, Japan, Kazakhstan, Nepal, North Korea, Pakistan, South Korea, Uzbekistan, the Asian part of Russia), Europe (Belarus, Bulgaria, Czech Republic, Estonia, Finland, Georgia, Germany, Greece, Hungary, Latvia, Lithuania, Norway, Poland, Romania, European part of Russia, Slovakia, Spain, Sweden, Turkey, Ukraine), and North America (Canada, Mexico, USA). This coryneform pathogen survives well in host tubers during storage providing the major source of inoculum each growing season. However, the bacterium grows relatively slowly on soil media and is easily out competed by other microorganisms commonly found in environmental samples. Although it does not survive well in soil, it is well known it may persist at low levels, active enough to enter in plant roots via wounds or where secondary roots emerge. Then, the pathogen systemically colonizes the xylem, causing unilateral wilt, marginal leaf necrosis, stem cankers, and ultimately plant death. That causes substantial economic losses worldwide by damaging tomatoes, potatoes and other solanaceous crops.

Moreover, bacteria belonging to *Pectobacterium carotovorum,* a Gram-negative plant-specific pathogen, cause soft rot disease in diverse vegetables and crops worldwide, including potato, carrot, lettuce, celery, onion, eggplant, Chinese cabbage or ornamentals, amongst others, and it is present in North America (US, Canada), Africa and in several European countries (UK, Netherlands, Germany, France...). The motility is due to the flexuous peritrichous flagella on the cell body. It has circular chromosomes with two plasmids, one linear and the other one circular. It is a soil inhabiting bacterium found mainly in the rhizosphere. It is known for its disease inducing ability on many plants. The disease is characterized by a proliferation of cells on many parts of susceptible plants, especially at the stem base and roots resulting in big swellings known as galls hence the disease named crown gall. The cause of the swellings is the presence of plasmids that have the ability to induce tumors when taken up by a susceptible host. The economic losses caused by soft rot *pectobacteria* can be great, depending on the value of the crop and the severity of the attack. As an example, *P. carotovorum* caused huge losses of up to €30 million annually in potato production in the Netherlands and with global losses of up to 30% at the estimated cost of US$ 50-100 million every year in the plants.

*Agrobacterium tumefaciens is* a soilborne Gram-negative bacterium that causes crown gall disease in more than 600 species of plants and is found worldwide. Commonly affected plants as peach, pear, apple, rose, plums, quince, beetroot, courgettes, beans, swedes, cherries, currants, gooseberries, grapevines, blackberries euonymus, forsythia, willow or poplar, amongst others. A. *tumefaciens* colonizes the rhizosphere and cause tumors in plants by transferring a DNA region (T-DNA) into a wide range of plants. Survival in the rhizosphere implies abilities to resist both abiotic and biotic stress, and a high capacity to rapidly access nutritional sources. The pathogenic lifestyle generally involves bacterial growth inside the host and tight interactions with it. The success of the pathogen thus depends on its ability to face the conditions encountered inside the host, including plant defense mechanisms, availability of nutrient resources, and interactions with the host microbiota. Crown galls caused by *A*. *tumefaciens* occur worldwide, causing great damage annually.

On the other hand, several soilborne plant pathogens are fungi that infect plants primarily through the roots, causing diseases such as root and stem rots.

*Fusarium oxysporum* f.sp. *cubense* (FOC) is considered one of the most devastating soilborne fungal pathogens of banana (*Musa* spp.) worldwide, causal agent of Panama disease, also called Fusarium wilt of banana. FOC is a common inhabitant of soil and produces three types of asexual spores responsible of primary and secondary infection: macroconidia, microconidia and chlamydospores. Four races of this pathogen have been described which attack different banana cultivars: Race 1 attacks cultivars in the *Musa* (AAA group) 'Gros Michel' and caused the 20th century epidemic. It also attacks 'Ducasse', 'Lady Finger',Musa (AAB group) 'Pome' and its subgroups, Musa (AAB group) 'Silk' and Musa (ABB group) 'Pisang Awak'. Race 2 attacks *Musa* (ABB group) 'Bluggoe' and its close relatives. Race 3 attacks *Heliconia* spp. Race 4 attacks *Musa* (AAA group) 'Dwarf Cavendish' as well as the hosts of races 1 and 2.

The spread of Fusarium *oxysporum* f. sp. *cubense* tropical race 4 (FOC TR4) has been projected to reach 17% of the global banana-growing area by 2040. equalling 36 million tons of production worth over US$10 billion [1]. To date, there is no effective control for *FOC*, so research and development of technologies to control the pathogen and prevent dispersal inside and outside of plots and farms is essential.

*Phytophthora* is a genus of plant-damaging oomycete, whose member species can cause enormous economic losses on crops worldwide, as well as environmental damage in natural ecosystems. *Phytophthora* is sometimes referred to as a fungus-like organism, but it is classified under a different clade altogether: SAR supergroup. One of its characteristics is the cell wall, that is made up of cellulose. *Phytophthora* zoospores recognize not only hosts but particular locations on hosts but also recognize and attach to specific root surface regions. This is a high degree of specificity at an early stage of cell development. For more than 150 years, humankind has been attempting to combat *Phytophthora* spp, however, despite the wide arsenal of methods involved, most attempts have not been sufficiently effective. Every year, this pathogen causes enormous losses to agriculture worldwide. As an example, Late Blight Disease (*Phytophthora infestans*) is the most economically important potato disease with worldwide loss of $6.7 billion and annual crop loses worldwide range from 15-30%. Fungicides, the most common tool to counteract *Phytophthora* spp, have certain drawbacks: a high price, a prohibited use in organic farming, a potential risk to the ecosystem and health and the opportunity for resistant strains to emerge. Thus, the development of cheap, organic and green friendly technologies to control the pathogen and prevent dispersal inside and outside of plots and farms is essential.

*Sclerotinia sclerotiorum* is a necrotrophic fungus with a broad host range, causal agent of white mold in more than 400 species of crops in many families including Brassicaceae (Cruciferae), Fabaceae (Leguminosae), Solanaceae, Asteraceae, and Apiaceae (Umbelliferae). The fungus can survive for many years in the soil and employs a wide array of cell-wall-degrading enzymes and oxalic acid to colonize its hosts. Fungicide application is the strategy most used to control white mold. In highly infested areas and under favourable weather conditions, up to six fungicide sprays are applied to manage the disease. The intensive use of fungicides, especially of site-specific products, can select for resistant isolates and, consequently, may lead to control failures.

Verticillium species are soilborne fungi that cause premature wilting of the host plant by blocking its vascular system. Verticillium wilt, caused by two similar fungal pathogens, *Verticillium albo-artrum and Verticillium dalhiae,* can infect over 300 kinds of annual, perennial and woody plants worldwide like potatoes, eggplants, tomatoes, cucumbers, lettuce, watermelon, cotton, canola, raspberries and strawberries. Olive trees, Elm and maple trees are particularly susceptible to this pathogen. *Verticillium spp* typically infect plants through wounds in the roots. Once infected, the fungus spreads throughout the plant by mycelium growth or via spores transported in the plant sap, eventually restricting water movement and causing branch dieback. Depending on the size of plant, they can be killed within a year or over time. Fungal spores can survive in the roots, trunk, or soil for long periods of time. Verticillium wilt can kill trees and is difficult or impossible to control and is considered a serious disease in olive trees. The fungus survives from season to season in the soil and in the roots of infected trees. In early summer the fungus can be readily isolated from diseased tissue in infected trees. There are no chemical control options for Verticillium wilt and the most effective management strategies to protect trees from Verticillium wilt are those taken before planting. When considering a new site for a plant grove, avoid land that has been planted for several years to crops that are highly susceptible to Verticillium wilt, such as cotton, eggplant, peppers, potato, or tomato, because Verticillium spp are usually present in these soils.

The main characteristic of those soil pathogen microorganisms is their long persistence in the soil. In many cases, soil remains contaminated for years [2] and decades [3] after removal of the crops, causing subsequent crops to become infected as well. Control measures for managing those pathogens soil infection comprises several diverse approaches. Biological approaches are those which employ natural agents, enemies, agents, or bio-based (animal, plant or microbial) products to control the pests. Another approach of infected soil management is to cultivate highly resistant cultivars against those pathogen microorganisms; however, this reduces crop biodiversity, and it also raises serious biosafety concerns that require careful consideration, including potential off-target effects and the unintended transfer of modified genes to other organisms. Variety of physical control methods were reported to have good remedy of infected soils. These techniques include hot water treatment and soil solarization. Chemical approaches include the utilization of synthetic chemicals for the control of plant diseases. Over the years, infected soils have been managed using a variety of chemical compounds, but these commercial chemical substances have had limited effectiveness in controlling pathogens in the field and the collateral effects on the environment (groundwater contamination, impact on wildlife) and human health (overexposure to potentially hazardous chemicals, accumulation in human organism) cause an international great concern. Thus, regardless of whether several control methods are developed to manage pathogen infected soils, efficient management strategies with eco-friendly effects and the desired level of effective control are still awaited and there is need to develop effective management methods to remedy and disinfection agricultural soils of those lethal diseases for many crops. Thus, the most effective mechanism for preventing infection in plants would be to develop the ability to remedy contaminated soil by pathogens to prevent their attack following crops.

Therefore, despite all the research efforts invested in the development of an effective treatment/control/prevention of infectious diseases caused by *Ralstonia solanacearum, Clavibacter spp, Pectobacterium carotovorum, Agrobacterium tumefaciens, Fusarium oxysporum* f.sp. *Cubense, Sclerotinia sclerotiorum, Phytophthora* spp and *Verticillium spp,* they are far from being satisfactory. Thus, there is still the long-felt need of finding an effective and safety treatment or prophylaxis for those devastating disease for worldwide agriculture.

### Summary of Invention

The inventors have found that the 1-monoglyceride of C12 fatty acid of formula (I) is useful for the treatment and prevention of plant infectious diseases, or conditions, caused by soilborne pathogen microorganisms. Specifically, the 1-monoglyceride of C12 fatty acid of formula (I) is useful for the treatment and prevention of plant infectious diseases, or conditions, caused by *Ralstonia solanacearum, Clavibacter spp, Pectobacterium carotovorum, Agrobacterium tumefaciens. Fusarium oxysporum* f.sp. *Cubense, Sclerotinia sclerotiorum, Phytophthora* spp and *Verticillium spp.* Moreover, the 1-monoglyceride of C12 fatty acid of formula (I) is useful to remedy infected soils with soilborne pathogens. Specifically, the 1-monoglyceride of C12 fatty acid of formula (I) is useful to remedy infected soils with *Ralstonia solanacearum, Clavibacter spp, Pectobacterium carotovorum, Agrobacterium tumefaciens, Fusarium oxysporum* f.sp. *Cubense, Sclerotinia sclerotiorum, Phytophthora* spp and *Verticillium spp.*

Monoglycerides are primarily used as surfactants, usually in the form of emulsifiers. Together with diglycerides, monoglycerides are commonly added to commercial food products in small quantities as food additive (i.e. E471) which helps to prevent mixtures of oils and water from separating. They are also often found in bakery products, beverages, ice cream, chewing gum, shortening, whipped toppings, margarine, spreads and peanut butter, and confections. In bakery products, monoglycerides are useful in improving loaf volume and texture, and as antistaling agents. Monoglycerides are also used to enhance physical stability towards creaming milk beverages.

As it is demonstrated in the experimental section, the 1-monoglyceride having a fatty acid of 12 carbon atoms (of formula I) is unexpectedly effective against the soil gram-negative bacteria *Ralstonia solanacearum, Pectobacterium carotovorum* and *Agrobacterium tumefaciens.* In fact, as shown in the comparative examples below, the 1-monoglyceride of formula (I) has not shown any effective antibacterial activity against other classic plant pathogen gram-negative bacteria such as strains of *Erwinia amylovora, Xanthomonas* and *Pseudomonas.*

It is also known that Gram-negative bacteria are more likely to be resistant (in comparison to Gram positive bacteria) to the effects of fatty acids and monoglycerides, presumably due to the presence of an outer membrane [4, 5, 6]. Nevertheless, document WO 2024165554 A1 [7] displays high efficacy of 1-monoglyceride of the C12 fatty acid in treatment and prevention of two Gram-negative pathogen bacteria of plant vascular system transmitted by insect vectors. Therefore, it is not obvious for those skilled in the art to deduce what will be the extent of the bactericidal effect of 1-monoglyceride of C12 fatty acid in soilborne bacteria in general, especially in gram-negative bacteria.

Thus, the inventors have found that 1-monoglyceride of the C12 fatty acid is effective against three gram-negative bacteria, more particularly against three of the most dangerous Gram-negative soilborne phytopathogenic bacteria, *Ralstonia solanacearum, Pectobacterium carotovorum* and *Agrobacterium tumefaciens,* in addition to gram-positive *Clavibacter spp.*

Although the antifungal activity of 1-monoglyceride of C12 fatty acid has been described in vitro for a certain number of fungi in food [5], juices [8], bread [9] and human health [10], its use as an antifungal on plant and crop pathogenic fungi has not been described. It is well known to those skilled in the art that the behavior of fungal species in aqueous media, such as those studied in mentioned references, differs from those fungal species that must remain outdoors, in adverse climatic conditions, for long periods of time. Therefore, the defense mechanisms and resistance to fungicides will also be different, without the possibility of inferring it. Nevertheless, the inventors have found out that 1-monoglyceride of C12 fatty acid is effective against soilborne pathogen fungi, specifically against *Fusarium oxysporum* f.sp. *Cubense, Sclerotinia sclerotiorum, Phytophthora* spp and *Verticillium spp.*

Despite the antifungal activity of 1-monoglyceride of C12 fatty acid has been described against *Fusarium oxysporum* in laboratory medium [11], it is well known for those skilled in the art that *Fusarium oxysporum f.sp. Cubense,* agent causal of Panama disease in banana tree, displays a different behavior regarding its response against antifungal treatments. So much so that Maryani et al [12] recently proposed to reclassify the taxonomical position of *Fusarium oxysporum f. sp. cubense* based on its phylogenetic position and phenotypic characters, such as morphology and pathogenicity. As a result, it has been named *Fusarium odoratissimum,* which is an independent species of the *Fusarium oxysporum* species complex. To date, it is well recognized for those skilled in the art that there is no effective control method against this disease due to the nature of the causal agent itself [3]. Therefore, there is still the long-felt need to find an effective and safety treatment or prophylaxis for this devastating disease for worldwide agriculture.

Soil health is a global concern linking tightly to crop production and food security, but it has been threatened by various soilborne phytopathogens worldwide. Soilborne phytopathogens can infect a wide range of agricultural and economic crops and have caused up to 78% loss in the productivity of cereal crops, vegetables, and fruits [13]. Many of the most aggressive phytopathogens are soilborne fungi and bacteria, which have been predicted to increase by up to 3-fold by 2050 globally [14]. From this perspective, monoglycerides are components of plants such as the root waxes and they can be used as starting material for the preparation of triacylglycerides which can be integrated in the plant membranes as structural components. Therefore, monoglycerides are considered safety compounds for agriculture even when used at high concentrations. From this standpoint, 1-monoglyceride of C12 fatty acid is considered harmless to the environment, animals and humans by the main food and agricultural safety agencies along the world as EFSA (European Food Safety Authority), EPA (U.S. Environmental Protection Agency) and FDA (U.S. Food and Drug Administration). Since the prevention of infection is the best strategy to avoid soilborne pathogens plant diseases, a method to remedy the infected soils with soilborne fungi and bacteria, using harmless and innocuous products, is also a solution highly required by the agricultural industry.

Finally, the use of a non-toxic but effective dose of 1-monoglyceride of formula (I) according to the present invention supposes a breakthrough on plants and crop protection against soilborne bacteria and fungi, as well as the overcoming of a long-felt need. These findings are highly advantageous since reveal that the use of the 1-monoglyceride of formula (I) allows treating and/or preventing diseases caused by *Ralstonia solanacearum, Pectobacterium carotovorum, Agrobacterium tumefaciens, Clavibacter spp, Fusarium oxysporum* f.sp. *Cubense, Sclerotinia sclerotiorum, Phytophthora* spp and *Verticillium spp,* being an important therapy with unmet phytosanitary needs.

Thus, the aspect of the invention relates to the use of a phytosanitary effective amount of a compound of formula (I) 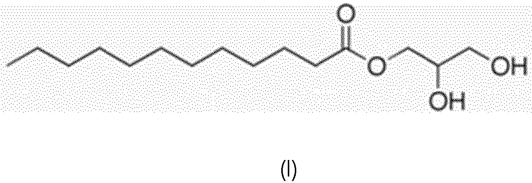 for the treatment and/or prevention of a plant infectious disease or condition caused by soilborne pathogen microorganisms, specifically those selected from the group consisting of *Ralstonia solanacearum, Pectobacterium carotovorum, Agrobacterium tumefaciens, Clavibacter spp, Fusarium oxysporum* f.sp. *Cubense, Sclerotinia sclerotiorum, Phytophthora* spp and *Verticillium spp.*

### Detailed description of the invention

All terms as used herein in this application, unless otherwise stated, shall be understood in their ordinary meaning as known in the art. Other more specific definitions terms as used in the present application are as set forth below and are intended to apply uniformly throughout the specification and claims unless an otherwise expressly set out definition provides a broader definition.

For the purposes of the present invention, any ranges given include both the lower and the upper endpoints of the range. Ranges given, such as temperatures, times, weights, and the like, should be considered approximate, unless specifically stated.

As used herein, the term "plant" refers to both monocotyledonous plants and dicotyledonous plants and includes familiar organisms such as but not limited to trees, herbs, shrubs, and grasses.

The terms "percentage (%) by weight", "weight/weight %" and "w/w%" have the same meaning and are used interchangeably. They refer to the percentage of one ingredient in relation to the total weight of a composition or mixture. The terms "percentage (%) by weight/volume", "weight/volume %" and "w/v%" have the same meaning and are used interchangeably. They refer to the percentage of one ingredient in relation to the total volume expressed in mL.

As used herein, the terms "one or more" and "at least one" are synonymous and are used herein indistinctly.

For the purpose of the invention, the term "Phytophthora spp" encompasses the pathogenic subspecies selected form the group of *Phytophthora cactorum, Phytophthora capsici, Phytophthora infestans, Phytophthora fragariae, Phytophthora ramorum, Phytophthora cinnamomi and Phytophthora citricola.*

For the purpose of the invention, the term "Clavibacter spp" encompasses the pathogenic subspecies selected form the group of *Clavibacter michiganensis, Clavibacter capsici, Clavibacter insidous, Clavibacter nebraskensis, Clavibacter sepedonicus, Clavibacter tesellarius* and *Clavibacter zhangzhiyongii.*

For the purpose of the invention, the term "Fusarium oxysporum f.sp. Cubense" encompasses the pathogenic subspecies selected form the group of *Fusarium oxysporum* f.sp. *Cubense Race 1*, *Fusarium oxysporum* f.sp. *Cubense Race 2*, *Fusarium oxysporum* f.sp. *Cubense Race 3*, *Fusarium oxysporum* f.sp. *Cubense tropical Race 4* and *Fusarium oxysporum* f.sp. *Cubense subtropical Race 4.*

For the purpose of the invention the term *"Verticillium spp"* encompasses the pathogenic subspecies selected form the group of *Verticillium dahlia* and *Verticillium albo-artrum.*

All of them are "soilborne pathogen microorganisms", which means that they are disease-causing microorganisms which lives both in soil and in a plant parts host (as roots and seeds) and which will infect undiseased plants coming from the soil and soil moisture (as opposed to the air or insect vectors).

For the purpose of the invention, the compound of formula (I) is also known for the non-proprietary names of monolaurin, glycerol monolaurate, glyceryl laurate, 1-lauroyl-glycerol which are considered interchangeable. The compound of formula (I) is the mono-ester formed from glycerol and lauric acid that has the IUPAC name 2,3-dihydroxypropyl dodecanoate with the CAS number 142-18-7 and NSC 698570.

As it is mentioned above, the first aspect of the invention relates to the use of a phytosanitary effective amount of the compound of formula (I) for the treatment and/or prevention of a plant infectious disease or condition caused by a soilborne pathogen microorganism. Specifically, the invention relates to the use of a phytosanitary effective amount of the compound of formula (I) for the treatment and/or prevention of a plant infectious disease or condition caused by at least one soilborne pathogen microorganism selected from the group consisting of *Ralstonia solanacearum, Pectobacterium carotovorum, Agrobacterium tumefaciens, Clavibacter spp, Fusarium oxysporum* f.sp. *Cubense, Sclerotinia sclerotiorum, Phytophthora* spp *and Verticillium spp.*

In an embodiment, the use of the compound of formula (I) is for the treatment of a plant infectious disease or condition caused by a soilborne pathogen microorganism. In an embodiment, the use of the compound of formula (I) is for the treatment of a plant infectious disease or condition caused by at least one soilborne pathogen microorganism selected from the group consisting of *Ralstonia solanacearum, Pectobacterium carotovorum, Agrobacterium tumefaciens, Clavibacter spp, Fusarium oxysporum* f.sp. *Cubense, Sclerotinia sclerotiorum, Phytophthora* spp and *Verticillium spp.*

In an embodiment, the use of the compound of formula (I) is for the prevention of a plant infectious disease or condition caused by a soilborne pathogen microorganism. In an embodiment, the use of the compound of formula (I) is for the prevention of a plant infectious disease or condition caused by at least one soilborne pathogen microorganism selected from the group consisting of *Ralstonia solanacearum, Pectobacterium carotovorum, Agrobacterium tumefaciens, Clavibacter spp, Fusarium oxysporum* f.sp. *Cubense, Sclerotinia sclerotiorum, Phytophthora* spp and *Verticillium spp.*

As it is mentioned above, the compound of formula (I) is useful for the treatment and/or prevention of a plant infectious disease or condition caused by the phytopathogenic strains of *Ralstonia solanacearum, Pectobacterium carotovorum* (also called formerly *Erwinia carotovorum), Agrobacterium tumefaciens* (also called *Rhizobium radiobacter*), *Clavibacter spp, Fusarium oxysporum* f.sp. *Cubense (also called Fusarium odoratissimum), Sclerotinia sclerotiorum, Phytophthora* spp and *Verticillium spp.*

Furthermore, the compound of formula (I) is useful for the prevention of a plant infectious disease or condition caused by the phytopathogenic strains of *Ralstonia solanacearum, Pectobacterium carotovorum* (also called formerly *Erwinia carotovorum), Agrobacterium tumefaciens* (also called *Rhizobium radiobacter*), *Clavibacter spp, Fusarium oxysporum* f.sp. *Cubense* (*also called Fusarium odoratissimum*), *Sclerotinia sclerotiorum, Phytophthora* spp and *Verticillium spp,* by soil disinfection.

The term "effective amount" refers to the amount enough to achieve the alleged technical effect, which means that amount of the compound of formula (I) that allows the treatment and/or prevention of a plant infectious disease or condition caused by soilborne pathogen microorganism. The term "phytosanitary effective amount" as used herein, refers to the amount of compound of formula (I) as active ingredient that is suitable for being administered or applied in plants by any way (including soil, foliar or intravascular) that allows the treatment and/or prevention of the plant infectious disease or condition mentioned herein above and below. Further, the term "soil disinfection effective amount" as used herein, refers to the amount of compound of formula (I) as active ingredient that is suitable for being administered or applied in soils by any way (liquid solution, solid carrier absorption) that allows the soil disinfection of soilborne pathogen microorganism mentioned herein above and below.

In an embodiment of the invention, the phytosanitary effective amount for the treatment and/or prevention of a plant infectious disease or condition caused by soilborne pathogen microorganism is from 0,01 mg to 50.000 mg per plant, depending on the size of the plant. In an embodiment of the invention, the phytosanitary effective amount for the treatment and/or prevention of a plant infectious disease or condition caused by soilborne pathogen microorganism is from 0,1 mg to 5.000 mg per plant. In an embodiment of the invention, the phytosanitary effective amount for the treatment and/or prevention of a plant infectious disease or condition caused by soilborne pathogen microorganism is from 1 to 500 mg per plant.

In an embodiment of the invention, the phytosanitary effective amount for the treatment and/or prevention of a plant infectious disease or condition caused by *Ralstonia solanacearum* is from 0,01 mg to 50.000 mg per plant. In an embodiment of the invention, the phytosanitary effective amount for the treatment and/or prevention of a plant infectious disease or condition caused by *Ralstonia solanacearum* is from 0,1 mg to 5.000 mg per plant. In an embodiment of the invention, the phytosanitary effective amount for the treatment and/or prevention of a plant infectious disease or condition caused by *Ralstonia solanacearum* is from 1 to 500 mg per plant. In an embodiment of the invention, the phytosanitary effective amount for the treatment and/or prevention of a plant infectious disease or condition caused by *Pectobacterium carotovorum* is from 0,01 mg to 50.000 mg per plant. In an embodiment of the invention, the phytosanitary effective amount for the treatment and/or prevention of a plant infectious disease or condition caused by *Pectobacterium carotovorum* is from 0,1 mg to 5.000 mg per plant. In an embodiment of the invention, the phytosanitary effective amount for the treatment and/or prevention of a plant infectious disease or condition caused by *Pectobacterium carotovorum* is from 1 to 500 mg per plant. In an embodiment of the invention, the phytosanitary effective amount for the treatment and/or prevention of a plant infectious disease or condition caused by *Agrobacterium tumefaciens* is from 0,01 mg to 50.000 mg per plant. In an embodiment of the invention, the phytosanitary effective amount for the treatment and/or prevention of a plant infectious disease or condition caused by *Agrobacterium tumefaciens* is from 0,1 mg to 5.000 mg per plant. In an embodiment of the invention, the phytosanitary effective amount for the treatment and/or prevention of a plant infectious disease or condition caused by *Agrobacterium tumefaciens* is from 1 to 500 mg per plant. In an embodiment of the invention, the phytosanitary effective amount for the treatment and/or prevention of a plant infectious disease or condition caused by *Clavibacter spp* is from 0,01 mg to 50.000 mg per plant. In an embodiment of the invention, the phytosanitary effective amount for the treatment and/or prevention of a plant infectious disease or condition caused by *Clavibacter spp* is from 0,1 mg to 5.000 mg per plant. In an embodiment of the invention, the phytosanitary effective amount for the treatment and/or prevention of a plant infectious disease or condition caused by *Clavibacter spp* is from 1 to 500 mg per plant. In an embodiment of the invention, the phytosanitary effective amount for the treatment and/or prevention of a plant infectious disease or condition caused by *Fusarium oxysporum* f.sp. *Cubense* is from 0,01 mg to 50.000 mg per plant. In an embodiment of the invention, the phytosanitary effective amount for the treatment and/or prevention of a plant infectious disease or condition caused by *Fusarium oxysporum* f.sp. *Cubense* is from 0,1 mg to 5.000 mg per plant. In an embodiment of the invention, the phytosanitary effective amount for the treatment and/or prevention of a plant infectious disease or condition caused by *Fusarium oxysporum* f.sp. *Cubense* is from 1 to 500 mg per plant. In an embodiment of the invention, the phytosanitary effective amount for the treatment and/or prevention of a plant infectious disease or condition caused by *Sclerotinia sclerotiorum* is from 0,01 mg to 50.000 mg per plant. In an embodiment of the invention, the phytosanitary effective amount for the treatment and/or prevention of a plant infectious disease or condition caused by *Sclerotinia sclerotiorum* is from 0,1 mg to 5.000 mg per plant. In an embodiment of the invention, the phytosanitary effective amount for the treatment and/or prevention of a plant infectious disease or condition caused by *Sclerotinia sclerotiorum* is from 1 to 500 mg per plant. In an embodiment of the invention, the phytosanitary effective amount for the treatment and/or prevention of a plant infectious disease or condition caused by *Phytophthora spp* is from 0,01 mg to 50.000 mg per plant. In an embodiment of the invention, the phytosanitary effective amount for the treatment and/or prevention of a plant infectious disease or condition caused by *Phytophthora spp* is from 0,1 mg to 5.000 mg per plant. In an embodiment of the invention, the phytosanitary effective amount for the treatment and/or prevention of a plant infectious disease or condition caused by *Phytophthora spp* is from 1 to 500 mg per plant.

In an embodiment of the invention, the phytosanitary effective amount for the treatment and/or prevention of a plant infectious disease or condition caused by *Verticillium spp* is from 0,01 mg to 50.000 mg per plant. In an embodiment of the invention, the phytosanitary effective amount for the treatment and/or prevention of a plant infectious disease or condition caused by *Verticillium spp* is from 0,1 mg to 5.000 mg per plant. In an embodiment of the invention, the phytosanitary effective amount for the treatment and/or prevention of a plant infectious disease or condition caused by *Verticillium spp* is from 1 to 500 mg per plant.

In an embodiment of the invention, the soil disinfection effective amount is from 0,01 mg to 500.000 mg per square meter of soil. In an embodiment of the invention, the soil disinfection effective amount is from 0,1 mg to 50.000 mg per square meter of soil. In an embodiment of the invention, the soil disinfection effective amount is from 1 to 5.000 mg per square meter of soil.

In an embodiment of the invention, the compound of formula (I) forms part of a "phytosanitary composition" comprising the phytosanitary effective amount of the compound of formula (I), and one or more "phytosanitary acceptable excipients and/or carriers". For the purpose of the present invention, the term "phytosanitary composition" refers to that composition suitable for use in agriculture. Further, the term "phytosanitary acceptable excipients and/or carriers" refers to that excipient or carrier suitable for use in the agriculture technology for preparing compositions with phytosanitary use. It means that either the composition or the excipients or carriers are suitable for use in contact with plants without undue toxicity, incompatibility, instability, undesirable response, among others. The appropriate excipients and/or carriers, and their amounts, can readily be determined by those skilled in the art according to the type of formulation being prepared. Examples of appropriate excipients of carriers include, without being limited to, solvents, cosolvents, diluents, surfactants, emulsifying agents, wetting agents, moisturizing agents, thickeners, stabilizers, rheologic modifiers, adhesive agents, pigments, and dyes, among others. In an embodiment, the compound of formula (I) forms part of a "phytosanitary composition" as defined herein above and below comprising from 0.01 to 99% by weight of the compound of formula (I). In another embodiment, the compound of formula (I) forms part of a "phytosanitary composition" as defined herein above and below comprising from 15-75% by weight of the compound of formula (I). In another embodiment, the compound of formula (I) forms part of a "phytosanitary composition" as defined herein above and below comprising from 20-50% by weight of the compound of formula (I). In another embodiment, the compound of formula (I) forms part of a "phytosanitary composition" as defined herein above and below comprising from 35-45% by weight of the compound of formula (I).

In an embodiment of the invention, the compound of formula (I) forms part of a "phytosanitary composition" as defined herein above and below which is in form of a liquid composition, solid composition, semisolid composition such as gels and creams. In an embodiment of the invention, the treatment and/or prevention comprises a foliar application, a trunk application, a root application, a soil application, or a combination thereof. In a particular embodiment, the prevention treatment comprises a liquid composition applied in soil. In a particular embodiment, the prevention treatment comprises a solid composition applied in soil.

The appropriate form of the phytosanitary composition, its excipients and/or carriers, and their amounts, can readily be determined by those skilled in the art according to the type of application. In an embodiment of the invention, the compound of formula (I) forms part of a "phytosanitary composition" which is a foliar topical composition in form of a liquid, solid or a gel. The term "liquid" composition encompasses solutions, suspensions, emulsions, liposomes, micelles, colloids, and particles (micro- and nano- particles). The term "solid" composition encompasses powder (soluble of dispersible powder), granules (including dispersible or soluble granules), and capsules.

In an embodiment of the invention, the compound of formula (I) forms part of a "phytosanitary composition" selected from ready-to-use composition or concentrated composition. The ready-to-use composition encompasses compositions that are in such a form that are appropriate for its direct use in agriculture. Meanwhile, the concentrated compositions require a subsequent step for diluting it until having the phytosanitary effective amount of the compound of formula (I).

In an embodiment, the compound of formula (I) forms part of a "phytosanitary composition" absorbed or adsorbed in a solid support. In an embodiment, the compound of formula (I) forms part of a "phytosanitary composition" absorbed or adsorbed in a solid support which is selected from the group consisting of a mineral based support, a polymeric based support and/or organic based support. In an embodiment, the compound of formula (I) forms part of a "phytosanitary composition" absorbed or adsorbed in a solid support, wherein the solid support is a mineral based support selected from the group consisting of silica, bentonite, sepiolite, active carbon, diatomaceous earth, and a combination thereof. In an embodiment, the compound of formula (I) forms part of a "phytosanitary composition" absorbed or adsorbed in a solid support, wherein the solid support is a polymeric based support selected from the group consisting of starch polymers, cellulose polymers, lignin polymers, chitosan and nanochitosan polymers, polyacrylamide, polyvinyl alcohols, polycaprolactone, polylactic acid, polyacrylate, polyhydroxyalkanoate, polyvinyl acetate. In an embodiment, the compound of formula (I) forms part of a "phytosanitary composition" absorbed or adsorbed in a solid support, wherein the solid support is an organic based support selected from the group consisting of compost, manure, lignin, cellulose, chitosan, humic acids, fulvic acids, treatment plants sludge, sawdust, straw and organic slurries and wastes from biomass industries.

In an embodiment of the invention, the compound of formula (I) forms part of a "phytosanitary composition" as defined herein above as unique active ingredient for the treatment or prevention of a plant infectious disease or condition caused by caused by soilborne pathogen microorganism. In an embodiment of the invention, the compound of formula (I) forms part of a "phytosanitary composition" as defined herein above as unique active ingredient for the treatment or prevention of a plant infectious disease or condition caused by at least one soilborne pathogen microorganism selected from the group of *Ralstonia solanacearum, Pectobacterium carotovorum, Agrobacterium tumefaciens, Clavibacter spp, Fusarium oxysporum* f.sp. *Cubense, Sclerotinia sclerotiorum, Phytophthora* spp and *Verticillium spp.*

In an embodiment of the invention, the compound of formula (I) forms part of a "phytosanitary composition" as defined herein above and below further comprising at least one additional active ingredient. In an embodiment of the invention, the compound of formula (I) forms part of a "phytosanitary composition" as defined herein above and below further comprising at least one additional active ingredient selected from the group consisting of pesticides, antifungal agents, antibacterial agents, essential oils, amino acid-based compounds and mixture thereof. Examples of additional antifungal agents include, but is not limited to tebuconazole, difenoconazole, fluquinconazole, azoxystrobin, propiconazole, carbendazim, flutriafol, fluopyram, mancozeb, prochloraz, kresoxim-methyl, epoxiconazole, imazalil, metconazole, prothioconazole-desthio, mefentrifluconazole, bixafen, boscalid, fluxapyroxad, folpet, fenhexamid, thiophanate-methyl, Amphotericin B, Nystatin, Natamycin or mixtures thereof. Examples of additional antibacterial agents include, but is not limited to, copper compounds, dithiocarbamates, amides, sulfonamides, aminoglycosides, cephalosporins, macrolides, quinolone, tetracycline, penicillins, dimetridazole. Examples of additional essential oils include, but is not limited to, essential oils of Origanum, cinnamon, eucalyptus, lemon grass, peppermint, orange, lemon, palmarosa, laurel, citronella, geranium, rosewood, patchouli, thyme, salvia, clove, mint, pepper, lavender, and mixtures thereof. Examples of additional pesticides include, but they are not limited to, organochlorines, organophosphates, carbamates, and mixture thereof. Examples of additional amino acid-based compounds include, but is not limited to, oligopeptide, polypeptide, proteins, enzymes, hemolysins, antibodies and mixture thereof.

In an embodiment, the use of the compound of formula (I) is for the treatment of a plant infectious disease or condition caused by soilborne pathogen microorganism wherein the treatment comprises applying the phytosanitary effective amount as defined above of the compound of formula (I), or a composition comprising it, to a plant infected by the soilborne pathogens. In an embodiment, the use of the compound of formula (I) is for the treatment of a plant infectious disease or condition caused by at least one soilborne pathogen microorganism selected from the group of of *Ralstonia solanacearum, Pectobacterium carotovorum, Agrobacterium tumefaciens, Clavibacter spp, Fusarium oxysporum* f.sp. *Cubense, Sclerotinia sclerotiorum, Phytophthora* spp and *Verticillium spp,* wherein the treatment comprises applying the phytosanitary effective amount as defined above of the compound of formula (I), or a composition comprising it, to a plant infected by those mentioned soilborne pathogens.

In an embodiment, the use of the compound of formula (I) is for the prevention of a plant infectious disease or condition caused by a soilborne pathogen microorganism, wherein the prevention comprises applying the phytosanitary effective amount as defined above of the compound of formula (I), or a composition comprising, it to a plant susceptible of being infected by the soilborne pathogens. In an embodiment, the use of the compound of formula (I) is for the prevention of a plant infectious disease or condition caused by at least one soilborne pathogen microorganism selected from the group of of *Ralstonia solanacearum, Pectobacterium carotovorum, Agrobacterium tumefaciens, Clavibacter spp, Fusarium oxysporum* f.sp. *Cubense, Sclerotinia sclerotiorum, Phytophthora* spp and *Verticillium spp,* wherein the prevention comprises applying the phytosanitary effective amount as defined above of the compound of formula (I), or a composition comprising it, to a plant susceptible of being infected by the mentioned soilborne pathogens.

In an embodiment, the use of the compound of formula (I) is for the disinfection of soils contaminated by a soilborne pathogen microorganism, wherein the disinfection comprises applying the soil disinfection effective amount as defined above of the compound of formula (I), or a composition comprising it, to a soil infected by the soilborne pathogens.

In an embodiment, the use of the compound of formula (I) is for the disinfection of soils contaminated by soilborne pathogen microorganism selected from the group of of *Ralstonia solanacearum, Pectobacterium carotovorum, Agrobacterium tumefaciens, Clavibacter spp, Fusarium oxysporum* f.sp. *Cubense, Sclerotinia sclerotiorum, Phytophthora* spp and *Verticillium spp,* wherein the disinfection comprises applying the soil disinfection effective amount as defined above of the compound of formula (I), or a composition comprising it, to a soil infected by the mentioned soilborne pathogens.

In an embodiment, the use of the compound of formula (I) is for the prevention of a plant infectious disease or condition caused by a soilborne pathogen microorganism, wherein the prevention comprises applying the soil disinfection effective amount as defined above of the compound of formula (I), or a composition comprising it, to a soil susceptible of being infected by the soilborne pathogens. In an embodiment, the use of the compound of formula (I) is for the prevention of a plant infectious disease or condition caused by at least one soilborne pathogen microorganism selected from the group of of *Ralstonia solanacearum, Pectobacterium carotovorum, Agrobacterium tumefaciens, Clavibacter spp, Fusarium oxysporum* f.sp. *Cubense, Sclerotinia sclerotiorum, Phytophthora* spp and *Verticillium spp,* wherein the prevention comprises applying the soil disinfection effective amount as defined above of the compound of formula (I), or a composition comprising it, to a soil susceptible of being infected by the mentioned soilborne pathogens.

In an embodiment, the use of the compound of formula (I) is for the treatment or prevention of a plant infectious disease or condition caused by a soilborne pathogen microorganism and the treatment or prevention comprises applying at least one application. In an embodiment, the use of the compound of formula (I) is for the treatment or prevention of a plant infectious disease or condition caused by soilborne pathogen microorganism and the treatment or prevention comprises applying a first application and at least one additional application daily, weekly, monthly, or annual frequency after the first application.

In an embodiment, the use of the compound of formula (I) is for the disinfection of soils contaminated by a soilborne pathogen microorganism, wherein the disinfection comprises applying at least one application annually. In an embodiment, the use of the compound of formula (I) is for the prevention of soil infection by a soilborne pathogen microorganism, wherein the prevention treatment comprises applying at least one application annually.

The compositions comprising a phytosanitary effective amount of the compound of formula (I) use in the present invention can be prepared according to methods well known in the state of the art. The appropriate method and conditions can readily be determined by those skilled in the art according to the type of formulation and way of application.

Throughout the description and claims the word "comprise" and variations of the word, are not intended to exclude other technical features, additives, components, or steps. Furthermore, the word "comprise" encompasses the case of "consisting of'. Additional objects, advantages and features of the invention will become apparent to those skilled in the art upon examination of the description or may be learned by practice of the invention. The following examples are provided by way of illustration, and they are not intended to be limiting of the present invention. Furthermore, the present invention covers all possible combinations of particular and preferred embodiments described herein.

### Examples

### 1. Antibacterial Effectivity Test

### 1.1. In-vitro Test

### General considerations

The antibacterial effectivity of the compound of formula (I) of the present invention was tested with the target soilborne pathogenic bacteria *Ralstonia solanacearum, Pectobacterium carotovorum, Agrobacterium tumefaciens* and *Clavibacter spp (Clavibacter michiganensis).* The concentration considered as the upper limit of the bactericidal effect was 250 ppm, while the bactericidal effect was the reduction of at least one logarithm of the initial concentration of the pathogen.

### 1.1.1. Bacteria

The antibacterial in-vitro effectivity of the compound of formula (I) of the present invention was tested with the following bacteria strains:
*Ralstonia solanacearum CECT125*
*Pectobacterium carotovorum IVIA3902.3*
*Agrobacterium tumefaciens CECT 472*
*Clavibacter michiganensis CECT790*
*Pseudomonas syringae pv. syringae* strain EPS 94
*Xanthomonas campestris pv. Vesicatoria* strain 206
*Erwinia amylovora EPS101*

The above tested strains came from pathogens collection of Vegetal Health Innovation and Development Center-University of Girona (CIDSAV). Nevertheless, any other available bacterial strains mentioned above obtained according to the state of the art can also be used (for instance, by taking a sample from a plant with a disease or condition caused by such a bacterium and cultivating it). These strains were used as examples of bacteria strains for performing the microbiological test of the composition of formula (I) in the present application.

### 1.1.2. Samples

The compound of formula (I) was tested at different concentrations and the results were compared with the commercially available antibacterial agent copper oxychloride suspension as a positive control (ZZ Cuprocol; Sygenta, 70% w/v copper oxychloride suspension) at the recommended manufacturers' dose.

Moreover, several negative control samples (which do not promote any bactericide effect) were also included. Comparative samples are disclosed herein below:
- Comparative control 1 wherein the compound of formula (I) was replaced with distillate water,
- Comparative control-OH 2 wherein the compound of formula (I) was replaced with ethanol.

### Sample preparation.

The commercially available capsule of 1 g of Glycerol 1- monolaurate of formula (I) (monolaurin, 99% w/w) was dissolved in ethanol following the instructions of the supplied, for having the following sample concentrations 12.5, 25, 50, 75,100, 250, 500 and 1000 µg/ml. ZZ Cuprocol was provided as a suspension (Sygenta) comprising copper oxychloride at 70% w/v and was tested at a concentration of 0.75 ml/L or 1.5 ml/L.

### 1.1.3. Method

The determination of the bactericidal activity was performed by means of the called "killing assay" with the suspension of the bacteria in liquid medium. The method comprised mixing 100µl of the appropriate concentration of the sample to be tested with 100µl of the bacterial suspension at a stock concentration of 2×10⁸ CFU/ml, obtaining a final volume of 200µl in each well of the microplate (bacterial suspension at a final concentration approximately 10⁸ CFU/ml). The multi-well plates were incubated at 28°C under constant agitation (150 rpm). After 30 and 120 minutes (min) of exposure of the bacterial strain to the different concentrations, samples were taken, and their survival (CFU/ml) were analyzed by counting viable cells in agar. The viable cells were compared with control samples. Three samples for each concentration and time were carried out. In those particular embodiments, one concentration of monolaurin (250 ppm) was tested for each bacterium.

### 1.1.4. Results

The results are shown in Table 1, which includes the bacterial survival (CFU/ml) in the different tested conditions, including the compound of formula (I) according to the present invention; control samples (i.e., comparative control distilled water and comparative control-ethanol); and the comparative positive sample antibacterial agent (Cuprocol).

**Table 1**

| **Samples** | | **Survival (Log CFU/ml)** | |
|---|---|---|---|
| **Tested samples** | **Amount** | **At 30min** | **At 120min** |
| **Ralstonia solanacearum Test** | | | |
| Comparative negative control 1 | - | 7,94 | 7.87 |
| Comparative negative Control-OH 2 | - | 7,86 | 7,83 |
| Comparative Cuprocol (Positive control) | 0.75 ml/L | 7,48 | 4,91 |
| Compound of formula (I) of the invention | 250 µg/ml | 4,81 | 4,06 |

| **Pectobacterium carotovorum Test** | | | |
|---|---|---|---|
| Comparative negative control 1 | - | 8.34 | 8.10 |
| Comparative negative Control-OH 2 | - | 8.16 | 8,27 |
| Comparative Cuprocol (Positive control) | 0.75 ml/L | 4,19 | 0 |
| Compound of formula (I) of the invention | 250 µg/ml | 7,53 | 6,98 |

| **Agrobacterium tumefaciens Test** | | | |
|---|---|---|---|
| Comparative negative control 1 | | 8,12 | 8,33 |
| Comparative negative Control-OH 2 | - | 8,17 | 8,30 |
| Comparative Cuprocol (Positive control) | 0.75 ml/L | 7,96 | 8,53 |
| Compound of formula (I) of the invention | 250 µg/ml | 6,47 | 5,79 |

| **Clavibacter michiganensis Test** | | | |
|---|---|---|---|
| Comparative negative control 1 | | 8,16 | 8,39 |
| Comparative negative Control-OH 2 | - | 8,34 | 8,41 |
| Comparative Cuprocol (Positive control) | 0.75 ml/L | 0 | 0 |
| Compound of formula (I) of the invention | 250 µg/ml | 0 | 0 |

| **Pseudomonas Test** | | | |
|---|---|---|---|
| Comparative negative control 1 | - | 8.06 | 8.11 |
| Comparative negative Control-OH 2 | - | 8.07 | 8.05 |
| Comparative Cuprocol (Positive control) | 1.5 ml/L | 4.06 | 0 |
| Compound of formula (I) of the invention | 250 µg/ml | 8.03 | 7.79 |

| **Xhantomonas Test** | | | |
|---|---|---|---|
| Comparative negative control 1 | - | 8.24 | 8.20 |
| Comparative negative Control-OH 2 | - | 8.16 | 8.13 |
| Comparative Cuprocol (Positive control) | 1.5 ml/L | 6,66 | 5,13 |
| Compound of formula (I) of the invention | 250 µg/ml | 7,87 | 7.75 |

For Erwinia *amylovora,* bacterial growing was observed (without performing a quantitative test) in all concentrations at 30 and 120 minutes. Therefore, no bactericidal effect of the compound of formula (I) was observed against *Erwinia amylovora.*

As it is shown in the Table above, the compound of formula (I) is not effective against all phytopathogenic bacteria. With the same argument, it is not clear that the compound of formula (I) is effective against gram-negative bacteria, since Pseudomonas, Xhantomonas and *Erwinia Amylovora* look immune to compound of formula (I) bactericidal effect. Meanwhile, for all tested bacteria, the survival of the untreated controls (with water and ethanol) was approximately 100%, at both times analyzed (30 min and 2h); however, a reduction longer than one Log CFU/ml regarding control samples was observed at 30 min for soilborne bacteria *Ralstonia solanacearum, Agrobacterium tumefaciens* and *Clavibacter,* and at 120 min for *Pectobacterium carotovorum.*

### 1.1.5. Conclusions of in-vitro antibacterial assay

The results of the in-vitro bactericide test demonstrate that a 1-monoglyceride of C₁₂ fatty acid of formula (I) has an appropriate minimum bactericidal concentration (MBC) for being used as an effective agent (antibacterial agent) for soilborne pathogen bacteria. And, therefore, useful as active agent for the treatment and/prevention of a plant infectious disease caused by *Ralstonia solanacearum, Pectobacterium carotovorum, Agrobacterium tumefaciens* and *Clavibacter spp.*

### 1.2. In-vivo antibacterial effectivity test against Ralstonia solanacearum.

The in-vivo effectivity of the compound of formula (I) of the present invention was tested with banana plants infected with *Ralstonia solanacearum.* As an example, the tested strain came from pathogens collection of Corporacion Colombiana de Investigación Agropecuaria (Agrosavia). Nevertheless, any other available bacterial strains mentioned above prepared according to the state of the art can also be used. Further, the banana plants (*Gros Michel*) were provided also by Agrosavia. Nevertheless, any other commercially available banana plant can also be used.

### 1.2.2. Samples

The compound of formula (I) was tested as a solution having a concentration of 0.5 mg/ml. The results were compared with a negative control sample (which do not promote any bactericide effect) wherein the compound of formula (I) was replaced for distillate water. For drench applications, the compound of formula (I) was dissolved in 70% ethanol and a dosage of 25 mg/plant (50 ml).

### 1.2.3. Method

Three-moth old banana plants, cultivar Gros Michel (*Musa acuminata, AAA group*) were maintained in 0.8-liter pots, in a growth chamber under controlled conditions, with temperature maintained at 28°C, 60% relative humidity, and a 12/12-hour light/dark photoperiod. Plants were watered every other day, and foliar fertilizer WUXAL^{®} BAYER Concentrated Solution was applied once a week. Also, throughout the experiments, standard treatments with insecticide and acaricide were performed to eliminate insect vectors or pests. However, fungicide and bactericide treatments were avoided in order to exclude interferences with the assay.

*Ralstonia solanacearum* (strain GRs2DFII) (Mateus-Cagua et al., 2024) was preserved in 15% glycerol at -80 °C and reactivation was performed in TZC (triphenyl tetrazolium chloride) agar medium at 30°C. For plant inoculation, *Ralstonia solanacearum* was cultured in nutrient broth for 48 hours at 30°C with constant agitation (200 rpm). The inoculum concentration was determined by optical density (OD 600nm) using a spectrophotometer and adjusted to the required concentration. Prior to inoculation, plant roots were wounded by pricking with a 100-1000 µL micropipette tip to facilitate pathogen entry. Plants were then drench-inoculated with 50 mL of *Ralstonia solanacearum* suspension at a concentration of 1 × 10⁸ cells*mL⁻¹. Three applications of 50 ml of compound of formula (I) solution (25 mg per plant in each application) were applied by drench to each pot. The first application was 8 days before pathogen inoculation. the second application was one day before pathogen inoculation and the third application was one week after pathogen inoculation.

Experiments were conducted using a completely randomized block design. The response variable recorded for the bioassays was a disease severity index. Severity disease symptoms were recorded every two days or up to 35 days after inoculation using an ordinal disease index scale: 0 (no wilting symptoms), 1 (0-25 % of the leaves showing wilting symptoms), 2 (25- 50 % of the leaves showing wilting symptoms), 3 (50-75 % of the leaves showing wilting symptoms), 4 (75-100 % of the leaves showing wilting symptoms), and 5 (all leaves wilted and plant dead).

### 1.2.4. Results

The results obtained from the in vivo assay in Gros Michel banana trees are shown in Table 2, expressed as the arithmetic media of all tested assays, which includes the score of the severity scale for the tested dosage of compound of formula (I) at 7, 10, 13, 17 and 21 days after inoculation.

### Treatment Assay:

**Table 2**

| ***Tested samples*** | **Days after infection** | | | | |
|---|---|---|---|---|---|
| | **7** | **10** | **13** | **17** | **21** |
| **Comparative Control** | 0.4 | 0.4 | 1.6 | 2.2 | 2.4 |
| **Compound of formula (I) (25 mg/plant, 3 applications)** | 0 | 0 | 0 | 0 | 0 |

As it is shown in the results of Table above, the use of the compound of formula (I) shows a beneficial activity against the undesired effects caused by the infection of *Ralstonia solanacearum,* even wherein the pathogen has been directly infected by root inoculation. In fact, after 21 days of inoculation, the control plants showed severe symptoms, while the treated plants with the compound of formula (I) showed no symptoms at all.

### 1.2.5. Soil remedy results

Since the compound of formula (I) was added by drench application to the plants, the CFU of *Ralstonia solanacearum* were measured in treated plant soils and control plant soils. The results at the end of trial (21 days, three applications, 75 mg of the compound of formula (I) per plant) showed an average value of 2.66*10⁶ CFU per soil gram in control plant soil, while treated plants showed an average value of 9.07*10⁵ CFU per soil gram average in treated plant soil. Thus, the experiment established that the compound of formula (I) has the capability of remedying the soil infection by pathogen microorganisms.

### 1.3. Conclusions

Regarding the in vitro and in vivo assays disclosed in the present application, it is concluded that the compound of formula (I) is useful as an active ingredient for the treatment and/or prevention of a plant infectious disease or condition caused by a soilborne pathogen bacteria, specifically those selected from the group consisting of

*Ralstonia solanacearum, Pectobacterium carotovorum, Agrobacterium tumefaciens* and *Clavibacter spp.*

### 2. Antifungal Effectivity Test

### 2.1. In-vitro Test

### General considerations

The antibacterial effectivity of the compound of formula (I) of the present invention was tested with the target soilborne pathogenic fungi *Fusarium oxysporum* f.sp. *Cubense (Race 1 and Tropical Race* 4), *Sclerotinia sclerotiorum, Phytophthora* spp *(Phytophthora cactorum and Phytophthora infestans) and Verticillium spp (Verticillium dahliae).* The concentration considered as the upper limit of the antifungal effect was 1500 ppm, while the antifungal effect was the reduction of at least one logarithm of the initial concentration of the fungus.

### 2.1.1. Fungi

The antifungal in-vitro effectivity of the compound of formula (I) of the present invention was tested with the following bacteria strains:
*Fusarium oxysporum* f.sp. *Cubense Race 1*
*Fusarium oxysporum* f.sp. *Cubense tropical Race 4*
*Sclerotinia sclerotiorum*
*Phytophthora cactorum CECT 20269*
*Phytophthora infestans (isolated from potato)*
*Verticillium dahlia V-136*

The above tested strains came from pathogens collection of Vegetal Health Innovation and Development Center-University of Girona (CIDSAV) and Corporación Colombiana de Investigación Agropecuaria (Agrosavia). Nevertheless, any other available fungus strains mentioned above obtained according to the state of the art can also be used (for instance, by taking a sample from a plant with a disease or condition caused by such a fungus and cultivating it). These strains were used as examples of fungus strains for performing the microbiological test of the composition of formula (I) in the present application.

### 2.1.2. Samples

The compound of formula (I) was tested, and the results were compared, in some cases, with the commercially available antifungal agent as a positive control (Econazole; Sigma-Aldrich), since no positive control is available for *Fusarium oxysporum* f.sp. *Cubense Race* 1 and *Fusarium oxysporum* f.sp. *Cubense tropical Race* 4. Moreover, negative control samples (which do not promote any bactericide effect) were also included. Comparative control wherein the compound of formula (I) was replaced with distillate water.

### Sample preparation.

The commercially available capsule of 1 g of Glycerol 1- monolaurate of formula (I) (monolaurin, 99% w/w) was dissolved in ethanol following the instructions of the supplied, for having the following sample concentration of 1500 ppm (1500 µg/ml). Econazole was provided as a nitrate salt (Sigma-Aldrich) and was tested at a concentration of 100 ppm (100 µg/ml).

### 2.1.3. Method

The determination of the antifungal activity was performed by means of the called "killing assay" with the suspension of the fungi in liquid medium. The method comprised mixing 100µl of the appropriate concentration of the sample to be tested with 100µl of the fungal spores suspension at a stock concentration of 2×10⁵ CFU/ml, obtaining a final volume of 200µl in each well of the microplate (bacterial suspension at a final concentration approximately 10⁵ CFU/ml). The multi-well plates were incubated at 23°C under constant agitation (150 rpm). After 24 and 72 hours (h) of exposure of the fungi to Glycerol 1- monolaurate concentration of 1500 ppm, samples were taken, and their survival (CFU/ml) were analyzed by counting viable cells in agar. The viable cells were compared with control samples. Three samples for each concentration and time were carried out.

### 2.1.4. Results

The results are shown in Table 3, which includes fungal survival (CFU/ml) in the tested conditions, including the compound of formula (I) according to the present invention; negative control samples and, in some of them, the comparative positive sample antifungal agent (Econazole).

**Table 3**

| **Samples** | | **Survival (Log CFU/ml)** | |
|---|---|---|---|
| **Tested samples** | **Amount** | **At 24 h** | **At 72 h** |
| **Fusarium oxysporum f.sp. Cubense Race 1 Test** | | | |
| Comparative negative control | - | 8,84 | 8.23 |
| Comparative Econazole (Positive control) | 100 µg/ml | - | - |
| Compound of formula (I) of the invention | 1500 µg/ml | 4,26 | 4,16 |

| **Fusarium oxysporum f.sp. Cubense Race 4 tropical Test** | | | |
|---|---|---|---|
| Comparative negative control | | 7.09 | 7.29 |
| Compound Econazole (Positive control) | 100 µg/ml | - | - |
| Compound of formula (I) of the invention | 1500 µg/ml | 2,46 | 2.22 |

| **Phytophthora cactorum Test** | | | |
|---|---|---|---|
| Comparative negative control | | 4,20 | 3,48 |
| Comparative Econazole (Positive control) | 100 µg/ml | 2,77 | 2,23 |
| Compound of formula (I) of the invention | 1500 µg/ml | 4,23 | 0 |

| **Phytophthora infestans *Test*** | | | |
|---|---|---|---|
| Comparative negative control 1 | | 4,08 | 3,22 |
| Comparative Econazole (Positive control) | 100 µg/ml | 3,12 | 2,77 |
| Compound of formula (I) of the invention | 1500 µg/ml | 4,10 | 0 |

| **Sclerotinia sclerotiorum Test** | | | |
|---|---|---|---|
| Comparative negative control 1 | - | 4,56 | 4.47 |
| Comparative Econazole (Positive control) | 100 µg/ml | 0 | 0 |
| Compound of formula (I) of the invention | 1500 µg/ml | 1.73 | 0.53 |

| **Verticillium dahliae Test** | | | |
|---|---|---|---|
| Comparative negative control 1 | - | 4,77 | 4,46 |
| Comparative Econazole (Positive control) | 100 µg/ml | 0 | 0 |
| Compound of formula (I) of the invention | 1500 µg/ml | 1,73 | 1,53 |

As it is shown in the Table above, the compound of formula (I) is effective in vitro against all tested soilborne fungi, but while in some of them (as Sclerotinia and Verticillium, for instance) the inhibition is very fast (30 min), in other fungi (as Phytophthora) the compound of formula (I) needs longer times (120 min) to inhibit the fungus growth.

### 2.1.5. Conclusions of in-vitro antifungal assay

The results of the in-vitro fungicide test demonstrate that a 1-monoglyceride of C₁₂ fatty acid of formula (I) has an appropriate minimum antifungal concentration for being used as an effective antifungal agent. And, therefore, useful as active agent for the treatment and/prevention of a plant infectious disease caused by soilborne fungi, specifically *Fusarium oxysporum* f.sp. *Cubense, Sclerotinia sclerotiorum, Phytophthora* spp and Verticillium spp.

### 2.2. In-vivo antifungal effectivity test against Fusarium oxysporum f.sp. Cubense Race 1.

The in-vivo effectivity of the compound of formula (I) of the present invention was tested with banana plants infected with *Fusarium oxysporum* f.sp. *Cubense Race 1*. As an example, the tested strain came from pathogens collection of Corporación Colombiana de Investigación Agropecuaria (Agrosavia), kindly provided by Zapata 2019. Nevertheless, any other available bacterial strains mentioned above prepared according to the state of the art can also be used. Further, the banana plants (*Gros Michel*) were provided also by Agrosavia. Nevertheless, any other commercially available banana plant can also be used.

### 2.2.2. Samples

The compound of formula (I) was tested as a solution having a concentration of 1000 ppm dissolved in 70% ethanol. Three foliar applications until the solution run off were applied on each treated plant. The first application was 8 days before pathogen inoculation. The second application was one day before pathogen inoculation and the third application was one week after pathogen inoculation.

### 2.2.3. Method

Three-moth old banana plants, cultivar Gros Michel (*Musa acuminata, AAA group*) were maintained in 0.8-liter pots, in a growth chamber under controlled conditions, with temperature maintained at 28°C, 60% relative humidity, and a 12/12-hour light/dark photoperiod. Plants were watered every other day, and foliar fertilizer WUXAL^{®} BAYER Concentrated Solution was applied once a week. Also, throughout the experiments, standard treatments with insecticide and acaricide were performed to eliminate insect vectors or pests. However, fungicide and bactericide treatments were avoided in order to exclude interferences with the assay.

*Fusarium oxysporum* f.sp. *cubense* Race 1 (*Foc* R1) strain was maintained in potato dextrose agar (PDA) at 28 °C. For plant inoculation, Foc R1 was cultured in Potato Dextrose Broth (PDB) for 7 days at 28°C with constant agitation. Microconidia were harvested by filtration through two layers of Miracloth (Merck Millipore, Darmstadt, Germany; product number 475855) and quantified using a Neubauer chamber. A conidial suspension was prepared at a final concentration of 1 × 10⁶ conidia*mL-1 using sterile deionized water. For inoculation, plants were carefully removed from their substrate, and the substrate was thoroughly mixed with the conidial suspension to achieve a final concentration of 1 × 10⁵ conidia*g-1 of substrate. Plantlets were then replanted into the inoculated substrate.

Disease symptoms were recorded every two days or up to 35 days after inoculation using an ordinal disease index scale: 0 (no wilting symptoms), 1 (0-25 % of the leaves showing wilting symptoms), 2 (25- 50 % of the leaves showing wilting symptoms), 3 (50-75 % of the leaves showing wilting symptoms), 4 (75-100 % of the leaves showing wilting symptoms), and 5 (all leaves wilted and plant dead).

### 2.2.4. Results

The results obtained from the in vivo assay in almond trees are shown in Table 4 expressed as the arithmetic media of all tested assays, which includes the score of the severity scale for compound of formula (I) at 4, 7, 14, 21 and 36 days after inoculation.

### Treatment Assay:

**Table 4**

| ***Tested samples*** | **Days after infection** | | | | |
|---|---|---|---|---|---|
| | **4** | **7** | **14** | **21** | **36** |
| **Comparative Control** | 0.21 | 0.64 | 1.01 | 1.28 | 2 |
| **Compound of formula (I) (25 mg/plant, 3 applications)** | 0 | 0 | 0.14 | 0.71 | 1.57 |

As it is shown in the results of table above, the use of the compound of formula (I) shows a beneficial activity against the undesired effects caused by the infection of *Fusarium oxysporum* f.sp. *cubense* Race 1, even wherein the FOC1 has been treated directly by root inoculation. Although the strongest effect is shown in the early times (4 to 14 days), even at 36 days the beneficial effect of the compound of formula (I) is still observed in treated plants.

### 2.3. Conclusions

Regarding the in vitro and in vivo assays disclosed in the present application, it is concluded that the compound of formula (I) is useful as an active ingredient for the treatment and/or prevention of a plant infectious disease or condition caused by a soilborne pathogen fungus, specifically those selected from the group consisting of *Fusarium oxysporum* f.sp. *Cubense Race 1, Fusarium oxysporum* f.sp. *Cubense tropical Race* 4, *Sclerotinia sclerotiorum, Phytophthora spp* and *Verticillium spp.*

If we join these results to those observed in the previous example concerning bacteria, it is possible to assets that the compound of formula (I) is useful as an active ingredient for the treatment and/or prevention of a plant infectious disease or condition caused by a soilborne pathogen microorganisms.

### 3. Compositions

### 3.1. Liquid compositions

### 3.1.1. Foliar liquid compositions comprising the 1-monoglyceride C₁₂ fatty acid

Reference liquid compositions for the foliar application comprising the 1-monoglyceride C₁₂ fatty acid of formula (I) are disclosed herein below.

Table 5 discloses the ingredients, their function and their amount expressed in weight percent in relation to the total weight of the composition.

**Table 5**

| **Ingredients** | **Commercial product** | **Function** | **Amount (% by weight)** |
|---|---|---|---|
| C12 fatty acid 1-monoglyceride | monolaurin 90%⁽¹⁾ | Active ingredient | 30 |
| Ethoxylated Octyl Phenol | Citowett^{®} | Wetting agent | 10 |
| Polyoxyethylene -20- sorbitan monooleate | Tween 80 | surfactant | 15 |
| vegetable oil | Agri-pure^{™} AP-406⁽²⁾ | Bio-solvent | 45 |

| | | | |
|---|---|---|---|
| (1) Monolaurin 90% contains 10% of free glycerol, diglyceride, and triglyceride (2) Agri-pure^{™} AP-406: plant-based rapeseed oil methyl ester commercialized by Cargill; any other vegetable oil suitable for agriculture could be used instead. | | | |

This formulation was dispersed in water in a ratio of 0.5 liter formulation/hectoliter of water (0,5% v/v) and, after stirring at 1000 rpm, it kept stable for more than 120 minutes. The mixture was carried out at 50°C.

### Concentrated foliar liquid composition

A concentrated dispersion in water comprising the formulation of Table 5 was prepared by firstly, mixing all the ingredients listed in table above; and secondly, dispersing the resulting mixture in water in a ratio of 0,1-5 liter of formulation per hectoliter of water (resulting in a final concentration of 0,1-5% v/v) and, after strong stirring at 1000 rpm for 5 minutes, it kept stable for more than 120 minutes. The mixture was carried out at 50°C.

### 3.1.2. Foliar liquid compositions comprising 1-monoglyceride C₁₂ fatty acid and biocide active ingredients

Reference liquid compositions for foliar applications comprising 1-monoglyceride C₁₂ fatty acid and additional biocide active ingredients are disclosed herein below.

### Liquid compositions comprising 1-monoglyceride C₁₂ fatty acid and herb essential oil

A reference liquid composition for foliar application comprising 1-monoglyceride C₁₂ fatty acid of formula (I) and at least one essential oil is disclosed herein below. Any other essential oil can be used instead of Origanum essential oil.

Table 6 discloses the ingredients, their function and their amount expressed in weight percent in relation to the total weight of the composition.

**Table 6**

| **Ingredients** | **Commercial product** | **Function** | **Amount (% by weight)** |
|---|---|---|---|
| C12 fatty acid 1-monoglyceride | monolaurin 90%⁽¹⁾ | Active ingredient | 30 |
| Ethoxylated Octyl Phenol | Citowett^{®} | Wetting agent | 10 |
| Polyoxyethylene -20- sorbitan monooleate | Tween 80 | surfactant | 15 |
| vegetable oil | Agri-pure^{™} AP-406 | Bio-solvent | 35 |
| Origanum essential oil | | Active ingredient | 10 |

| | | | |
|---|---|---|---|
| (1) Monolaurin 90% contains 10% of free glycerol, diglyceride, and triglyceride (2) Agri-pure^{™} AP-406: plant-based rapeseed oil methyl ester commercialized by Cargill; any other vegetable oil suitable for agriculture could be used instead. | | | |

A diluted aqueous dispersion comprising the formulation of Table 6 was prepared following the processes disclosed in previous section adding the herb essential oil for preparing the first mixture of ingredients.

### Liquid compositions comprising 1-monoglyceride C₁₂ fatty acid of formula (I) and a fungicide

A reference liquid composition for foliar application comprising 1-monoglyceride C₁₂ fatty acid of formula (I) and at least one fungicide agent is disclosed below. Any other fungicide disclosed in the state of the art can be used.

Table 7 discloses the ingredients, their function and their amount expressed in weight percent in relation to the total weight of the composition.

**Table 7**

| **Ingredients** | **Commercial product** | **Function** | **Amount (% by weight)** |
|---|---|---|---|
| C12 fatty acid 1-monoglyceride | monolaurin 90%⁽¹⁾ | Active ingredient | 30 |
| Ethoxylated Octyl Phenol | Citowett^{®} | Wetting agent | 10 |
| Polyoxyethylene -20- sorbitan monooleate | Tween 80 | surfactant | 15 |
| vegetable oil | Agri-pure^{™} AP-406⁽²⁾ | Bio-solvent | 38 |
| Copper oxychloride suspension⁽³⁾ | ZZ Cuprocol | Active ingredient | 7 |

| | | | |
|---|---|---|---|
| (1) Monolaurin 90% contains 10% of free glycerol, diglyceride, and triglyceride (2) Agri-pure^{™} AP-406: plant-based rapeseed oil methyl ester commercialized by Cargill; any other vegetable oil suitable for agriculture could be used instead. (3) In form of 70% w/v copper oxychloride suspension | | | |

A diluted aqueous dispersion comprising the formulation of Table 7 was prepared following the processes disclosed in previous section adding the antifungal agent for preparing the first mixture of ingredients.

### 3.1.3. Nanoemulsion liquid foliar composition

The 1-monoglyceride of formula (I) can be presented in nano-emulsions as well as other kinds of nano-formulation.

The nano-formulation is in form of oil-in-water nanoemulsion comprising 1-monoglyceride C₁₂ fatty acid of formula (I). The droplet size was between 200-400 nm measured by nanoparticle tracking analysis (NTA).

Table 8 discloses the ingredients, their function and their amount expressed in grams.

**Table 8**

| **Ingredients** | **Commercial product** | **Function** | **Amount (g)** |
|---|---|---|---|
| C12 fatty acid 1-monoglyceride | monolaurin 90%⁽¹⁾ | Active ingredient | 35 |
| Soy lecithin | - | Emulsifying agent | 10 |
| Polyoxyethylene sorbitan monopalmitate | Tween 40 | surfactant | 5 |
| water | - | Solvent | 50 |

| | | | |
|---|---|---|---|
| (1) Monolaurin 90% contains 10% of free glycerol, diglyceride, and triglyceride | | | |

The monolaurin was mixed with soy lecithin at 50°C by using strong stirring (4000 rpm) for 5 minutes. On the other hand, water was mixed with the surfactant at 50°C by using strong stirring (4000 rpm) for 5 minutes. Both solutions were mixed at 50°C by using strong stirring (4000 rpm) for 10 minutes. After that, the mixture was sonicated with an ultrasound probe (Hielscher UP200st, 26 kHz) for 12 minutes at 50°C. The temperature was controlled during the ultrasound applied step by a cooling jacket, and the resulting mixture in nano-dispersion form was stable for at least three days.

### 3.2. Solid compositions

### 3.2.1. Solid compositions for soil sprinkling application

Exemplary compositions of a mineral solid absorption composition for soil sprinkling application is disclosed herein below. Instead, silica, other minerals can be used as bentonite, sepiolite, active carbon, diatomaceous earth and/or combinations thereof, among others.

Table 9 discloses the ingredients, their function and their amount expressed in weight percent in relation to the total weight of the composition.

**Table 9**

| **Ingredients** | **Commercial product** | **Function** | **Amount (% by weight)** |
|---|---|---|---|
| 1-monoglyceride C12 fatty acid | monolaurin 90%⁽¹⁾ | Active ingredient | 35 |
| Silica | IQE D300 | support | 63 |
| Silica | IQE Ibersil D100 | fluidizing agent | 2 |

| | | | |
|---|---|---|---|
| (1) Monolaurin 90% contains 10% of free glycerol, diglyceride, and triglyceride | | | |

The 1-monoglyceride C12 fatty acid was added as spray at 70°C to a rotary drum where the mixture of silica (IQE D300/IQE Ibersil D100) was already placed. The drum rotated at 30 rpm.

### Citation List

[1] Scheerer, L. et col. "A quantified approach to projecting losses caused by Fusarium wilt tropical race 4". Acta Hortic. 2018, 1196, 211-218.
[2] Alvarez B. et col. "Ralstonia solanacearum Facing Spread-Determining Climatic Temperatures, Sustained Starvation, and Naturally Induced Resuscitation of Viable but Non-Culturable Cells in Environmental Water". Microorganisms. 2022 Dec 16;10(12):2503.
[3] Ploetz, R.C. et col. "Management of Fusarium wilt of banana: A review with special reference to tropical race 4". Crop. Prot. 2015, 73, 7-15.
[4] Churchward CP et al. "Alternative antimicrobials: the properties of fatty acids and monoglycerides" Crit. Rev. Microbiol. 2018, vol 44(5).
[5] Buňková L. et col. "Comparison of antibacterial effect of seven 1-monoglycerides on food-borne pathogens or spoilage bacteria" Acta Veterinaria Brno, 2011, vol. 80, no.1.
[6] Wang W. et col. "In Vitro Antibacterial Activities and Mechanisms of Action of Fatty Acid Monoglycerides against Four Foodborne Bacteria". Journal of food protection, 2020, 331-337.
[7] WO2024165554A1 1-Monoglyceride of C12 fatty acid for the treatment or prevention of infectious plant diseases. Blasco Bigatá, Maria. 2023..
[8] Dolezalkova I. et col. "Monoacylglycerols as fruit juices preservatives". Czech J. Food Sci. 2012;30(6):567-572.
[9] Buňková, L. et col "Influence of monoacylglycerols on growth inhibition of micromycetes in vitro and on bread". Eur. J. Lipid Sci. Technol. 2010, 112: 173-179.
[10] Bergsson G. et col "In vitro killing of Candida albicans by fatty acids and monoglycerides". Antimicrobial Agents and Chemotherapy, 2001, 45: 3209-3212.
[11] Altieri C. et col. "Antifungal activity of fatty acids and their monoglycerides against Fusarium spp. in a laboratory medium". International Journal of Food Science & Technology, 2008, 44(2):242 - 245
[12] Maryani N. et col. "Phylogeny and genetic diversity of the banana Fusarium wilt pathogen Fusarium oxysporum f. sp. cubense in the Indonesian centre of origin". Stud. Mycol. 2019, 92, 155-194.
[13] Zhang W. et col. "Global pesticide use: profile, trend, cost/benefit and more". Proceedings of the International Academy of Ecology and Environmental Sciences, 2018, 8:1-27.
[14] Delgado-Baquerizo M. et col. "The proportion of soil-borne pathogens increases with warming at the global scale". Nat Clim Chang, 2020, 10:550-554.

## Claims

1. Use of a phytosanitary effective amount of a compound of formula (I) 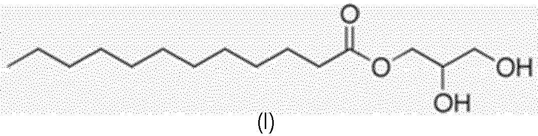 for the treatment and/or prevention of a plant infectious disease or condition caused by soilborne pathogen microorganisms.

2. The use according to claim 1, wherein the disease or condition is caused by at least one microorganism selected from the group consisting of *Ralstonia solanacearum, Pectobacterium carotovorum, Agrobacterium tumefaciens, Clavibacter spp, Fusarium oxysporum* f.sp. *Cubense, Sclerotinia sclerotiorum, Phytophthora* spp and *Verticillium spp.*

3. The use according to claims 1 to 2, wherein the phytosanitary effective amount of compound (I) is from 0.01 mg to 50.000 mg per plant,

4. The use according to any one of claims 1 to 3, wherein the phytosanitary effective amount of compound (I) is from 0.1 mg to 5.000 mg per plant or, optionally, from 1 to 500 mg per plant.

5. The use according to any one of claims 1 to 4, wherein the compound of formula (I) forms part of a phytosanitary composition comprising a phytosanitary effective amount of the compound of formula (I), and one or more phytosanitary acceptable excipients and/or carriers.

6. The use according to claim 4, wherein the phytosanitary composition comprises from 0.01 to 99% by weight of the compound of formula (I), optionally, from 15-75% by weight of the compound of formula (I), further optionally from 35-45%.

7. The use according to any one of claims 5 to 6, wherein the phytosanitary composition further comprises at least one additional active ingredient.

8. The use according to claim 7, wherein the at least one additional active ingredient is selected from the group consisting of pesticide, antifungal agents, antibacterial agents, essential oils, amino acid-based compounds, and mixture thereof.

9. The use according to any one of claims 1 to 8, wherein the treatment and/or prevention comprises applying the compound of formula (I), or alternatively the phytosanitary composition, in a form selected from the group consisting of liquid, solid, and gel.

10. The use according to any one of claims 1 to 9, wherein the treatment and/or prevention comprises a foliar application, a truck injection application, a root application, a soil application, or a combination thereof.

11. The use according to any one of claims 1-10, wherein the treatment or prevention comprises applying at least one application of a phytosanitary effective amount of the compound of formula (I) or a phytosanitary composition comprising it.

12. Use of a soil disinfection effective amount of a compound of formula (I) 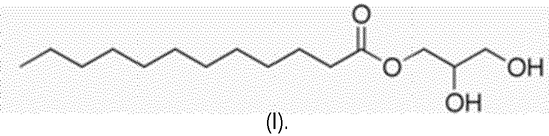 to remedy infected soils by soilborne pathogen microorganisms.

13. The use according to claim 12 wherein the soil is infected by at least one microorganism selected from the group consisting of *Ralstonia solanacearum, Pectobacterium carotovorum, Agrobacterium tumefaciens, Clavibacter spp, Fusarium oxysporum* f.sp. *Cubense, Sclerotinia sclerotiorum, Phytophthora* spp and *Verticillium spp.*

14. The use according to claims 12 to 13, wherein the soil disinfection effective amount of compound (I) is from 0,01 mg to 500.000 mg per square meter of soil, optionally from 0,1 mg to 50.000 mg per square meter of soil, further optionally from 1 to 5.000 mg per square meter of soil.
